# EUROPEAN PATENT SPECIFICATION

(11) **EP 1 872 455 B1**
(45) Date of publication and mention of the grant of the patent: **10.10.2018**
(21) Application number: 06717056.3
(22) Date of filing: 27.03.2006
(51) Int. Cl.: H02H 9/08, H01F 27/28, H01F 27/42

(54) **AN INDUCTIVE DEVICE**
INDUKTIVE EINRICHTUNG
DISPOSITIF INDUCTIF

(30) Priority: 21.04.2005 SE 0500901
(43) Date of publication of application: 02.01.2008
(73) Proprietor: Swedish Neutral AB, 196 31 Kungsängen (SE)
(72) Inventor: SCHÜTTE, Thorsten, S-722 28 Västerås (SE); WINTER, Klaus, S-196 37 Kungsängen (SE)
(74) Representative: Bjerkéns Patentbyrå KB (Stockholm)
(86) International application number: PCT/SE2006/000373
(87) International publication number: WO 2006/112766

(56) References cited:
- EP-A1- 0 164 321
- WO-A1-99/57736
- WO-A2-99/10959
- DE-B3- 10 307 668
- JP-A- S61 141 112
- RU-C1- 2 170 938
- US-A- 5 699 219

## Description

### TECHNICAL FIELD

The present invention relates to an inductive device intended to be connected with a multiple phase alternating current power network in connection with a zero voltage point of the power network. The device comprises a coil and is arranged to allow a reactive current through the coil in connection with a possible earth fault. The invention also relates to a method for producing such a device.

### PRIOR ART

Multiple phase alternating current power networks are used to transfer electrical power across large distances. A multiple phase alternating current power network comprises at least two, but usually three, electrical conductors, each transferring an alternating current. The phases of the alternating currents are displaced in relation to each other so that their combined potential is zero. A point in which the conductors are connected with each other is called a zero point, since the potential in this point is zero. Such zero points are usually found at the generator creating the alternating currents, at transformations transforming the alternating currents and in some instance also at the end users.

One problem with multiple phase alternating current power networks arises with so called earth faults, which means that one of the conductors in the power network is shortcut with the earth. Due to their extension, the non-shortcut conductors in the power network forms a capacitance with the ground, wherein a current may pass between these, usually two, conductors and the earth. Hence a closed circuit is formed between the non-shortcut conductors, the ground and the shortcut conductor, wherein a current may pass through the earth fault. Such an earth fault current is very dangerous due to the high differences in voltages, arising in the ground close to the fault, and may therefore cause large damages. In some instances arcs may be generated between the conductor and earth, wherein the current is not broken even if the contact between the shortcut conductor and the ground is ended.

It is known to connect inductive devices between a zero point of a power network and earth in order to decrease the current through the earth fault. Such an inductive device usually comprises a coil with an inductance L. During normal operation the potential of the zero point is close to the potential of the earth, wherein no, or a very small, current passes through the inductive device. During an earth fault however, the potential of the zero point is changed, so that a current passes through the inductive device. With a correct choice of the inductance L the same current flows through the inductive device as through the capacitance created between the non-shortcut power conductors and the ground. Hence a closed circuit is formed between the inductive device and the capacitors, wherein, according to Kirchhoff's law, the current through the earth fault is decreased considerably. Preferably this leads to that it is no longer necessary to shut down the power network due to safety issues during an earth fault, but the power network may remain in operation and may continue to distribute electrical power. Furthermore, any arcs are extinguished and reparation work may be performed without any hazard for workers and sometimes even without the need to shut down the power network. Such an inductive device is in daily speech called a reactor.

The inductive device must be able to handle the high voltages associated with power networks. Inductive devices according to the prior art are therefore usually insulated with oil. Oil together with a pressboard or paper is a good insulator and a good cooling medium. This makes a high fill factor possible, that is, a high portion of electrically conducting material inside the coiling, and therefore a compact construction. One problem with oil-filled devices is that they may leak, which would be harmful for the environment. The device must therefore be contained inside a large and sealed metal casing, and it must also be provided with additional safety devices. Usually the device is placed in a metal tray which in turn is located above a liquid-proof collecting pool, and which is sufficiently large to receive all oil in the device, if the device would leak, and possible rain water. This rainwater must furthermore be emptied regularly if the device is placed outdoors.

In some applications, for example in areas sensitive for environmental disturbances, the use of oil is forbidden and in these cases a molding resin has been used as insulator. Molding resin is a hard material in which the coil is molded. One problem with molding resin is that the molding resin is heavy and that a large resin mass is need around the coil. Furthermore, molding resin has a low heat conduction, which severely limits the allowed power in the coil in comparison with an oil-insulated device with the same measurements. Molding resin is also difficult and expensive to handle during manufacturing, since the resin is manufactured from poisonous substances through polymerization and hardening.

Document JP61141111 discloses a reactor coil connected between a zero voltage point of a power network and an earth potential. The reactor coil is housed in a vessel containing insulating oil or inert insulating gas. Document WO99/57736 discloses a power current booster transformer wound with a flexible cable comprising an inner electrical conductor an an insulating casing.

### SUMMARY OF THE INVENTION

According to a first aspect of the present invention one object of the invention is to provide an inductive device for connection with a multiple phase alternating current power network in connection with a zero point for alleviating a possible earth fault, which device is simple and inexpensive to produce.

This is achieved with a device according to claim 1. The device comprises a coil wound from a flexible cable comprising an inner conductor and an outer insulating casing around the inner conductor. Hence the manufacturing of the coil is very simple, inexpensive and fast, since a flexible cable may easily be wound to the turns of the coil. No handling of liquid substances is demanded, such as when manufacturing devices comprising oil or molding resin, which further simplifies the manufacturing. A cable may further be manufactured or bought at a very low cost. Preferably the first insulating casing has such a thickness that the first insulating casing resists discharges through the insulation. An inductive device according to the invention may for example be a reactor, or a reactor in combination with a zero point former.

For geometrical reasons and because the thickness of the insulation of the cable, which is adapted after the highest voltage present in the coil, is equally thick along the entire cable, the fill factor for a coil wound with a cable becomes somewhat lower than for a device insulated with oil. It has now been realized that this is balanced in that it is substantially easier to cool a device manufactured with cables. Hence, the total weight and volume of the inductive device becomes substantially the same as for the device according to the prior art, and in the best of cases even smaller. Furthermore no sealed metal container and no safety devices for collecting leaking oil is needed, since the device is oil free, which allows the size of the device to be decreased further. That the device according to the invention is oil free also allows that the device may be used in locations in which devices with oil are forbidden. Corresponding advantages has also been shown to be valid in relation to coils manufactured with molding resin as an insulator. Thus a device is achieved which is very simple, inexpensive and fast to produce, and which has equal performance with the device according to the prior art.

According to one embodiment the cable comprises a second casing arranged around the first insulating casing, which second casing is electrically conductive, so that the electric field in the cable is smoothed out. Preferably the second casing is of metal, for example copper or aluminium. Hence the risk for discharges and sparks inside the device is decreased. Preferably the cable also comprises a third insulating casing arranged around the second casing.

According to a further embodiment the device comprises an electrically functional module and an arrangement arranged to electrically connect at least one portion of the second casing to the electrically functional module. Hence a number of different desired results may be achieved, dependent on to which module the second portion is connected. According to one embodiment at least one portion of the second casing is connected with an earth module arranged to hold the potential in this portion of the second casing close to the earth potential. Thus, the potential of the surface of the cable is close to zero, wherein the electrical field is very effectively trapped inside the cable. On the contrary, the magnetic field is allowed to pass unhindered. Since the electrical field is trapped the outside of the device is in principal at zero potential and thus safe to touch. Furthermore it is also possible to manufacture the other, outer parts of the device in metal, which is not possible without trapping the field due to the risk for sparks and shortcuts. By manufacturing the outer parts of the device in metal the mechanical stability or the device is increased, and the manufacturing is also facilitated and becomes more inexpensive, since metal is an inexpensive material which is easy to process. For devices according to the prior art the mechanical support constructions inside and close to the coil must be manufactured by a non-conducting material, such as pressboard, in order to avoid sparks and shortcuts.

According to a further embodiment at least one portion of the second casing is arranged to form a secondary winding of the coil, wherein this portion of the second casing is connected to an induction control module arranged to control the inductance of the device. By the second casing forming a secondary wounding to the coil a current will be induced in the second casing when a current flows through the coil, that is through the inner electrical conductor. By connecting the secondary winding to an inducting control module the inductance of the coil may be controlled in a simple way. The current through the conductor of the coil, which forms a primary winding, may thus, by controlling the currents in the secondary winding, be varied so that it conforms with the capacitive current between the power network and earth. Hence the device may be adapted to different conditions so that the earth current is very close to zero.

Preferably the induction control module comprises one or more capacitors, wherein the capacitors form a circuit with the secondary winding, which increases the inductance of the coil. Preferably the induction control module also comprises a control module arranged to control the switching of said capacitor or capacitors. Alternatively the induction control module may instead comprise coils. Thus the current through the device may be controlled when the earth current is changed.

According to a further embodiment said induction control module comprises a voltage modulator. During an earth fault a resistive current component is also formed between the non-erring conductors of the power network and earth. Previously this component has been small, but for new power networks with larger extensions and with a higher proportion of cables located below the ground, this current may be considerable. A voltage modulator allows feeding of a desired current to a circuit. The voltage modulator is therefore arranged to feed a phase-displaced, alternating current component, which is transformed to a current in the coil, corresponding to said resistive current. Thus this component of the earth fault current is also decreased. Of course the voltage modulator may also feed a current affecting the inductive component of the device. Preferably the voltage modulator is also arranged to compensate for overtones in the fault current.

According to a further embodiment the second casing of the cable is divided into at least two electrically separate portions. Preferably the second casing is divided so that said portions are arranged one after the other in the length direction of the cable. Thus the induced voltage or current in said portions are decreased by transformation. According to one embodiment the second casing is divided into electrically separate portions so that the voltage over one portion is less than or equal to half the voltage over the coil, preferably less than or equal to one third, more preferably smaller than or equal to one fifth, and most preferably smaller than or equal to one tenth. Thus the risk for discharges and shortcuts between different portions of the second casing or between turns of the coil is decreased. Furthermore the thickness of the third insulating casing on the top of the second casing may be decreased.

Preferably at least one of said electrically separate portions is connected to at least one electrically functional module. With advantage at least two of said electrically separate portions are connected to one electrically functional module each. Most preferably two electrically separate portions are each connected with one electrically functional module, of different types. Thus a larger flexibility and better control of the inductive device and the current through the coil is allowed.

According to a further embodiment the coil comprises at least one channel arranged to allow a flow of a cooling medium through the coil. Preferably said cooling medium is air, but it may also comprise a liquid or some other gas. According to one preferred embodiment the coil comprises at least two turns of said cable and the device comprises at least one spacer member arranged between the two turns so that an air gap is obtained in between. Thus the cooling of the device is improved considerably, since the channel, or air gap, provides a very large area for cooling. Preferably the device comprises several spacer members arranged to provide several air gaps. With advantage the air gaps are parallel with each other and arranged in the length direction of the coil. Preferably the air gaps are straight, wherein the fall of the pressure across the air gaps decreases. Thus, cooling of the device by natural convection is allowed.

According to a second aspect one object of the present invention is a method for manufacturing an inductive device for connection with a multiple phase alternating current power network in connection with a zero point for alleviating a possible earth fault, which method is simple and inexpensive to perform. This object is achieved with the method according to claim 13. Preferably this method comprises steps for manufacturing the device as it has been described above, in connection with the first aspect of the invention.

According to one embodiment the method comprises feeding the cable to an inner space defined by an inner surface of a support construction of the device, and placement of the cable to form said turns, so that the cable is held fixed inside the inner space, by the cable striving to straighten itself towards the inner surface. Preferably the inside of the support construction is concave in its shape, and most preferably the inner surface comprises at least two opposite surface sections, between which the cable is held fixed. Thus the cable will naturally be held fixed by the tensions striving to straighten the cable inside the inner space. With advantage the inner surface of the support construction is cylindrical. Thus the cable will assume the shape of the turns of the coil in a simple way. By winding the cable towards the inside of and along the inner surface of the support construction the winding is simply done by feeding and placing the cable, instead of winding the cable around a drum by applying tensional forces. Thus not as large force is needed to wind the cable meaning a simpler and less expensive manufacturing and that the cable is subject to less stress.

According to one embodiment the placement of the cable comprises bending the cable along the inner surface of the support construction. Preferably the placement of the cable also comprises bending the cable into a shape corresponding to said turns of the coil. Preferably the bending is achieved by pressing the cable towards the inner surface of the support construction. The cable will thus be bent naturally and form the turns of the coil on the inside of the support construction, as the cable is fed into the inner space. Thus the manufacturing of the device is considerably simplified. One further advantage is that the cable is supported towards the support construction, wherein the coil is very durable. In particular, in the event of a possible shortcut of the coil, the turns of the coil are subjected to a large current with the same direction in all turns, so that the turns repel each other with a large force, the cable is supported by the support construction so that the risk for explosion of the device decreases.

According to one embodiment the manufacturing of the coil comprises winding the cable from the outside and inwards by winding the cable in at least a first, outer turn, and thereafter winding the cable in at least one second, inner turn. Preferably the outer turn thus has a circumference, which is larger than the inner turn. Preferably the outer turn is arranged to enclose the inner turn. Preferably the inner turn is then at least indirectly held bent by and supported against the inside of the outer turn. With indirectly is here intended that it may be elements located between the first and the second turn, which second elements are supported against the first turn and which mediate the support to the second turn. Thus the cable can be wound by feeding and placing it inside the inner space into said turns, without use of tensional forces in the cable, even for inner turns.

According to one embodiment the winding of the cable into said turns comprises controlling the placement of the cable with a placement member. Preferably said placement member comprises a concave, U-shaped surface for controlling the cable. Such a surface comprises three surfaces, which control the cable in different directions. Preferably the placement member is shaped so that the cable glides against the concave surface. Thus it is ensured that the turns of the cable is placed close to each other, which increases the fill factor of the coil.

According to one embodiment the feeding of the cable comprises paying out of the cable from a cable spool and turning the cable spool during the paying out of the cable so that the torsion in the cable is decreased. Thus the winding of the cable is simplified since it is no longer necessary to force the cable to turn around its own axes. Furthermore the durability is increased since the tensions in the cable decrease.

### SHORT DESCRIPTION OF THE DRAWINGS

The invention is now to be described with a number of nonlimiting examples of the invention and with reference to the attached drawings.
- Fig.1: shows a multiple phase alternating current power network and an inductive device according to one embodiment of the invention connected to a zero point of the power network.
- Fig. 2: shows an inductive device according to a second embodiment of the invention.
- Fig. 3: shows the construction of a cable of the inductive device in fig. 2.
- Fig. 4: shows a schematic wiring diagram of one half of the inductive device in fig. 2.
- Fig. 5: shows one example of how the second casing of the cable of the inductive device in fig. 2 is divided into electrically separate portions.
- Fig. 6: shows one half of the inductive device in fig. 2 from above and in cross section.
- Fig. 7: illustrates the method for manufacturing an inductive device according to the invention.

### DETAILED DESCRIPTION

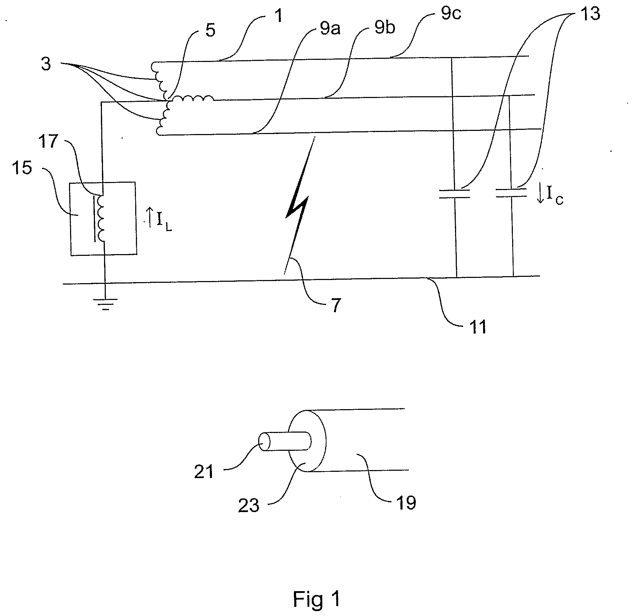

In fig. 1 a multiple phase alternating current power network 1, which is arranged to distribute electrical power is shown. The power network 1 comprises three coils 3, which, for example, may be three coils in a transformer or in a generator generating the alternating current of the power network. The three coils 3 coincide in a zero point 5, in which the potential is zero during normal operation. For other types of power networks coils may be connected in such a way that no zero points are obtained. In this case a zero point may be created by a zero point former. Zero point formers are known in the prior art.

In fig. 1 an earth fault 7 between a first conductor 9a of the power network 1 and earth 11 is shown. Such an earth fault 7 may for example arise if a tree falls onto the conductor 9a, or if the conductor falls down onto the ground 11. Such an earth fault 7 may also arise if the conductor is located below ground and there is a hole on the insulation of the conductor. In fig. 1 two capacitors 13 are also shown between a first and a third conductors 9b, 9c of the power network 1 and the earth 11. The capacitors 13 are formed due to the extension of the conductor 9b, 9c in relation to the ground. During an earth fault a current I_{C} thus passes between the second and third conductors 9b, 9c and the earth 11, wherein a closed circuit between the earth fault 7 and the capacitors 13 is formed.

In fig. 1 an inductive device 15 connected between the zero point 5 and the earth 11 is also shown. The inductive device 15 comprises a coil 17 formed to allow a reactive current I_{L} through the inductive device 15 in connection with the earth fault 7. The inductance of the coil 17 is in this example adapted to the size of the capacitors 13, so that the current I_{L} is equal to the current I_{C}. Thus a closed circuit is formed between the coil 17 and the capacitors 13, which means that the current through the earth fault 7 is decreased. Thus the current through the earth fault 7 is decreased into such a degree that the power network may remain in operation without the need to immediately remedy the fault.

In this example the coil 17 comprises a cable 19 comprising an inner electrical conductor 21 and a first insulating casing 23 arranged around the inner electrical conductor 21. The cable 19 is flexible and wound into at least one turn of the coil 17. In that the coil 17 is wound with a flexible cable 19 the coil 17 is very simple to produce. Furthermore such a cable 19 is oil free wherein the inductive device may be used in sensitive areas without extensive safety measures. A cable winding usually has a lower fill factor than a conventional winding. However a cable 19 has a better heat conduction, which means that smaller equipment for cooling is needed. Thus the device in total is both less expensive, lighter and smaller. The device is also simpler to place in narrow spaces.

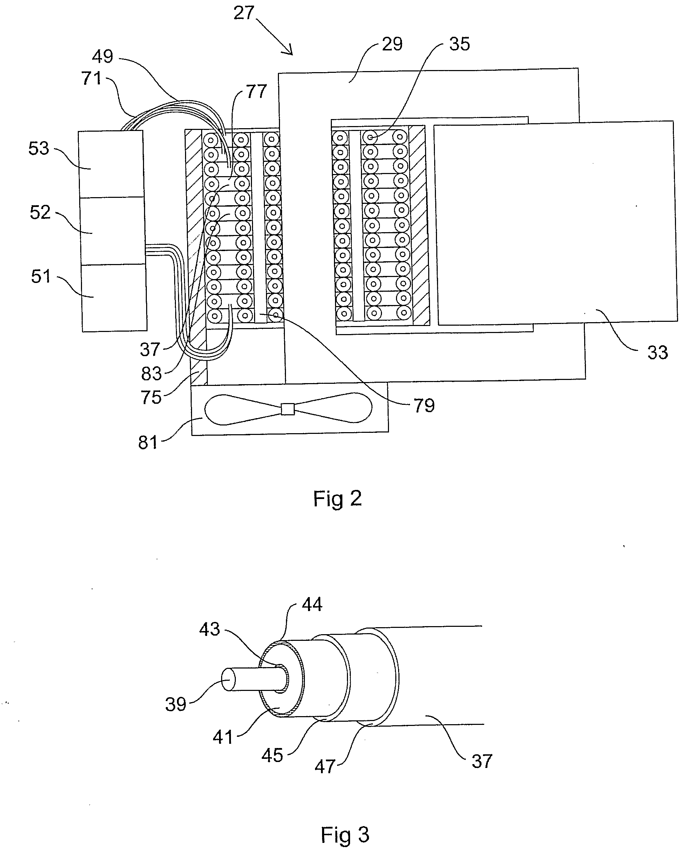

In fig. 2 a further example of an inductive device 27 intended to be connected between a zero point and earth is shown. In fig. 2 it is seen that the device 27 comprises a rectangular iron core 29. The device also comprises two coils wound around one vertical part of the rectangular iron core 29 each. The left coil 35 in fig. 2 is shown in cross section while the right coil is encased in a protective housing 33. The two coils are in this example connected in series and oriented so that the magnetic field flows in a circle through the iron core 29. The two coils thus form a collective inductance for the device 27. In another example the coils may instead be connected in parallel.

The coil 35 comprises a cable 37, which is flexible and wound to form the turns of the coil 35. Thus the advantages of a flexible cable described earlier are achieved. The construction of the cable 37 is shown in greater detail in fig. 3.

The cable 37 comprises an inner conductor 39 of metal which is arranged to constitute the primary winding of the coil 35 and is arranged to allow a reactive current I_{L} to flow through the inner conductor 39, and thus through the coil 35. The cable 37 further comprises a first insulating casing 41 arranged around the inner conductor 39, which first casing 41 is formed to insulate the inner conductor 39. The insulating casing 41 is manufactured from a polymer material, in this example thermo plastic. The insulating casing 41 comprises polyethylene, in this example cross bound polyethylene, which in daily speech is denoted PEX. Preferably the first insulating casing 23 has such a thickness that the first insulating casing 23 resists discharges through the insulation.

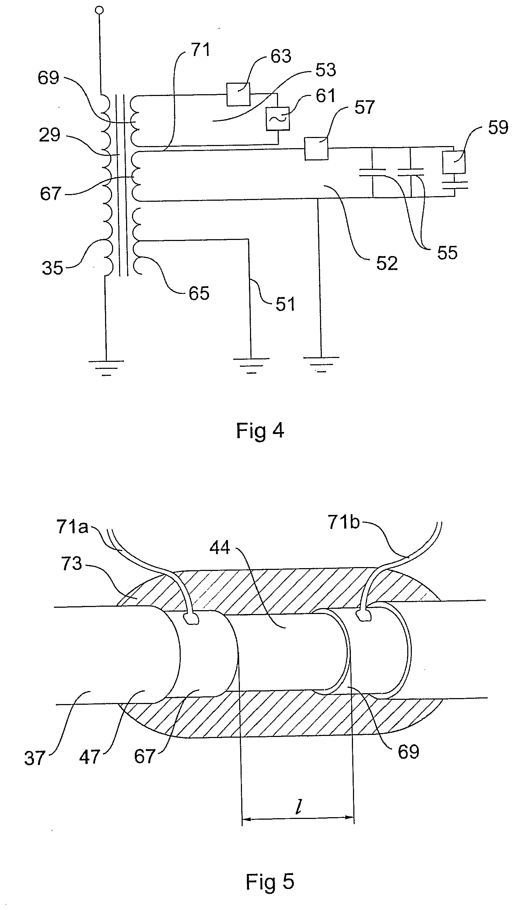

Furthermore, the insulating casing 41 comprises a thin layer 43 with an elevated conductivity. The increased conductivity allows a weak current in the layer 43, which smoothes potential peaks caused by unevenness, such as sharp protrusions or edges on the outside of the inner electrical conductor 39. Thus the risk for discharges through the insulation 41 is decreased. In this example said layer 43 comprises polyethylene with carbon black as filler. The first insulating casing 41 further comprises a second layer 44 with elevated conductivity, which is similar to the first layer 43, but is arranged along the mantle surface of the casing 41. The function of the second layer 44 is described in greater detail below with reference to fig. 5.

The cable 37 further comprises a second electrically conducting casing 45 arranged around the first casing 41. Thus a current is allowed on the surface of the insulating casing 41, wherein the electrical field on the surface of the cable 37 is smoothed out by the casing 45. In this example the second electrically conducting casing 45 is of metal, for example copper or aluminium. The cable 37 further comprises a third insulating casing 47 arranged around the second electrically conducting casing 45. Since the potential in the second electrically conducting casing 45 is low the third insulating casing 47 may be thin.

The second casing 45 in the cable 39 in fig. 2 is further divided into three electrically separate portions 65, 67 and 69. The way in which the second casing 45 is divided is described later in connection with fig. 5. The device 27 further comprises three electrically functional modules 51,52,53 and one arrangement 49 shaped to connect the three electrically separate portions 65,67,69 of the second casing 45 to each of the three electrically functional modules 51,52,53. The arrangement 49 is in this example constituted by five electrical conductors, wherein one or two conductors respectively connects one portion to its functional module. The electrical functional modules 51,52,53 are described more explicitly in connection with fig. 4. In practice an inductive device may of course comprise any number of electrically functional modules and electrically separate portions. Further more the electrically separate portion may be connected to several electrically functional modules and the other way around.

In fig. 4 a schematic wiring diagram for the device 27 is shown. The inner conductor 39 is shown schematically in the form of a primary winding 35 and the iron core 29 is shown schematically in the form of two vertical lines. In fig. 4 is also shown a second electrically conductive casing 45 divided into three electrically separate portions 65,67,69, which are schematically reproduced as secondary windings to the coil 35. These portions 65,67,69 of the second casing 45 are further connected to one functional module 51,52,53 each.

In fig. 4 a first module 51 is shown to comprise a connection to an earth potential 66. The module 51 is connected with only one conductor to the middle of the first portion 65. Thus the potential in the first portion 65 of the second casing 45 is very close to zero. By the potential being very close to zero the electrical field in the cable 37 is effectively trapped. In principle the entire electrical field is trapped inside the cable 37 for this portion 65 of the cable, which drastically lowers the electrical potential on the outside of the winding. This makes the device safer from any shortcuts.

In this example the two portions 67,69 of the second casing 45 are arranged to each form one secondary winding to the coil 35. These portions 67,69 of the second casing 45 are each connected to one inductive control module 52,53 arranged to control the inductance of the device. In that these portions of the second casing 45 are secondary windings a potential is induced across the portions 67,69 when a current flows through the inner electrical conductor 39. Since the second casing 45 is divided, the number of turns in the portions 67 and 69 will be fewer than the number of turns in the coil 35. Thus, the voltage induced across the portions 67,69 will be substantially lower than the voltage in the primary coil. In fig. 4 is shown that the second casing 45 is divided into three parts, wherein the induced voltage will be equal to or less than one third of the voltage over the coil 35. With advantage the casing 45 is divided into several separate portions when the voltage over the coil 35 is expected to be high, in order to limit the voltage across a separate portion.

The second portion 67 of the second electrical conductive casing 45 is connected with the second electrically functional module 52. The module 52 comprises a number of parallel connected capacitors 55. When a current passes through the inner conductor 39 a current is produced in the portion 67, which flows through the capacitors 55, so that the inductance of the coil 35 is increased with a value dependent on the collective capacitance of the capacitors 55. Thus the total current through the coil 35 is decreased.

The electrically functional module 52 further comprises a control module 57 arranged to allow connection or disconnection of the capacitors 55. Thus it is possible to control the inductance of the device 27, wherein the reactive current I_{L} in a simple manner may be adapted to the capacitive current I_{C} between the power network and earth when the capacitance between the power network and earth is changed. The capacitive current I_{C} may for example be changed dependent on switching in the power network. The second module 52 further comprises a second control module 59 arranged to allow connection or disconnection of a singular capacitor or a group of capacitors. Thus the inductance of the device 27 may be finally adjusted.

The third electrically separate portion 69 of the second electrically conductive casing 45 is connected to the third module 53, which third module comprises a voltage modulator 61. The voltage modulator 61 is arranged to feed the portion 69 with a desired voltage. In this example the voltage modulator is arranged to feed the third portion 69 with a voltage changing the current through the coil 35 in such a way that the device 27 compensates for a resistive current between the power network and earth. Such a resistive current arises for example due to conduction to earth and corona currents and is displaced 90 degrees in relation to both the capacitive current I_{C} and the inductive current I_{L}. For large power networks, in particular with a high portion of cables, this component may be so large that an arc no longer is extinguished, when only compensating the capacitive current. The voltage modulator 61 is also arranged to feed the third portion 69 with a voltage changing the inductance of the coil 35. Thus overtones are also compensated. Furthermore a continuous change of the inductance of the device 27 is achieved. A third module 53 further comprises a control module 63 arranged to control the voltage modulator 61.

In fig. 5 it is shown how the second casing 45 is divided into the two electrically separate portions 67 and 69. A second electrically conductive casing 45 is divided by removing a ring shaped part with the length l from the second casing 45 being removed between the portions 67 and 69, so that an electrically separating gap is formed between the portions 67,69. Hence the electrically functional modules connected to the electrically separate portions will not effect each other into any negative degree, furthermore the electrically separate portions will constitute separate secondary windings to the coil, wherein the induced voltage over the portions becomes lower.

From the removing of a ring shaped part of the second casing being removed the underlying first insulating casing 41 becomes exposed. The insulating casing 41 is, as previously mentioned, provided with a second outer layer 44 with increased conductivity. The second outer layer 44 is connected between the second 67 and the third portions 69, wherein the layer 44 allows a leak current between the second 67 and the third portion 69. Thus the electrical field is trapped inside for this length of the cable as well. The gap between the portions 67 and 69 has a length such that the leak current through the layer 44 is so small that the heating of the layer 44 becomes insignificant. In this example the length of the gap is about 30 cm.

Furthermore a ring shaped part of the third insulating casing 47 is also removed, the length of which is longer than the length of the removed part of the second casing 45, wherein one end of each respective portions 67 and 69 is left free. The arrangement 49, arranged for connection of the portions 67, 69 to said electrically functional modules 52,53, thus comprises a first 71a and a second connection conductor 71b, arranged to electrically connect to each respective end of the second 67 and the third portion 69. In this example the connection conductors are soldered directly onto the portions 67,69. In another example the conductors may also be fastened by the conductors comprising one ring shaped clamp each, which is clamped onto the ends, or by winding the conductors around the ends and by gluing or screwing them onto the ends.

The cable 37 also comprises an insulation arranged to cover the division of the casing 45. Hence the exposed ends of the portions, 67 and 69 respectively, and also the outer layer 44 of the first casing 41, are insulated from the environment. In this example the insulation 73 comprises an insulation tape taped onto the location for the division, but the insulation may also be constituted by any other electrically insulating material attached onto the cable 37.

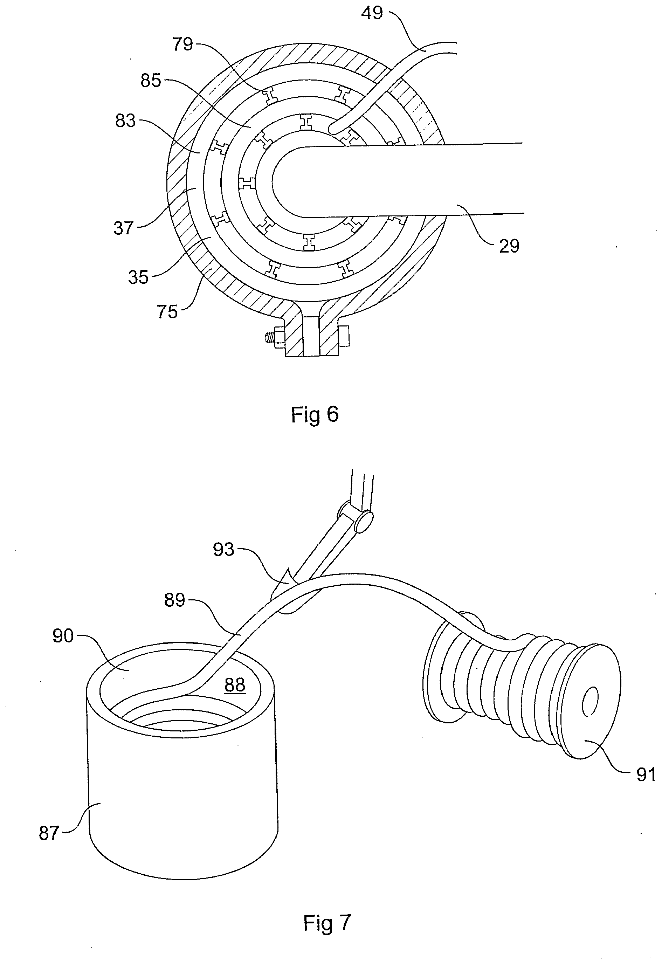

In fig. 6 the coil 35 is shown from above. The device 27 comprises a support construction 75, which is cylindrical, in this example circular cylindrical, and arranged to enclose the coil 35. The support construction 75 thus comprises an inner surface 76 defining an inner space 77, inside which the coil 35 is arranged. In this example the inner space 77 is also circular cylindrical. The inner surface 76 is concave and continuous and comprises opposite surface sections. In another example of the invention the support construction may instead comprise several separate portions, such as rods or walls, and the inner surface may comprise holes or be disrupted.

The cable 37 is wound into said coil 35 inside the inner space 37. The cable 37 is further arranged by at least in part being hold fixed inside the inner space 77 by the cable 37 striving to straighten itself against the inner surface 76. Since the inner surface comprises opposite surface sections the cable 37 is held fixed against the surface portions when the cable 37 is striving to straighten itself. The cable 37 is thus wound so that the cable 37 bear against and is kept bent by the inner surface 76 of the support construction 75. Such a device is simple to manufacture by winding the cable 37 towards the inner surface 76 of the support construction 75 in such a way that the cable 37 is bent by the cable being pressed towards the inner surface 76, instead of bending the cable by the cable being pulled around a bobbin.

The coil 35 comprises several turns with substantially the same diameter or circumference arranged in a first, outer layer 83 of turns of the cable 37. In this example the cable turns in the layer 83 are arranged to bear against and be bent by the support construction 75. The coil 35 also comprises a second layer 85 of cable turns lying inside the first layer. The cable 37 is wound so that the turns in the inner layer 85 at least indirectly are kept bent by the outer layer 83. Furthermore, the coil 35 is wound from outside and inwards. Thus the first, outer layer 83 of turns is wound in a proceeding step and the second, inner layer 85 of turns is wound in a following step.

The device 27 comprises several spacer members 79 arranged between the layers 83, 85. The spacer members 79, each comprises a first and a second bearing surface, arranged to bear against each layer 83,85 respectively. The bearing surfaces are rounded to decrease the risk for the spacer members 79 to damage the cable 37. The spacer members 79 are arranged to hold the layers 83 and 85 on a distance from each other, so that an air gap is obtained between the layers 83,85. Thus a stream of air may pass between the layers 83 and 85, which allows for an efficient and simple cooling of the device.

The spacer members 79 are elongate and arranged to extend in the length direction of the coil 35. Thus the layers 83,85 are separated so that the air gaps pass through the entire device 27 in the length direction of the device. The air gaps comprise one opening in the lower part of the device 27 and one opening in the upper part of the device 27. Furthermore the air gaps are straight, wherein the fall of the pressure is small when an air stream passes through the air gaps. In this example the arrangement 49 is also arranged inside said air gaps. Since the arrangement 49 only comprises thin conductors these will not increase the fall of the pressure to any substantial degree.

The device 27 further comprises a fan arrangement 81 arranged to achieve an airflow through the air channels, which ensures an efficient cooling of the coil 35. In another example of the device the air may instead circulate through natural convection. In another example of the device the air gaps may instead be constituted by fluid channels, wherein a liquid may circulate as a cooling medium.

In this example the device 27 also comprises a third layer 86 of cable turns arranged inside the second layer 85, wherein the spacer members 79 are also arranged between the second and the third layers 85,86. The spacer members 75 are thus placed alternately, so that one spacer member arranged between the first and the second layers is arranged in the middle between two spacer members arranged between the second and the third layer.

The support construction 75 comprises a hollow cylinder of metal, which however is cut up in its length direction in order to avoid a current to be induced in the support construction 75 from the magnetic flow from the coil 35. The support construction 75 thus comprises a sealing of a non-conducting material to keep the cylinder in shape. The support construction 75 is formed robust so that it withstands the tensional forces formed at a possible short circuit of the coil 35. These forces otherwise risk to blow the device 27 apart.

In the following one example of a method for manufacturing an inductive device according to the invention is to be described with reference to fig. 7. In fig. 7 a support construction 87, a flexible cable 89 wound onto a cable spool 91, a placement member 93, a spacer member 95, and a connection arrangement 97 are shown. The method for manufacturing the device comprises that at least one part of a coil intended to belong to the inductive device is manufactured by winding the flexible cable 89 into at least one turn. The cable 89 may be designed as the cable 19 described in connection to fig. 1 but in this example the cable is designed as the cable 37 in connection to the figures 2-6.

The winding of the cable 89 comprises feeding the cable 89 to an inner space 99 defined by an inner surface 90 of the support construction 87. The cable 89 is thus paid out from the cable spool 91 and fed into the space 99 in the support construction 87. The cable spool 91 is turned in relation to the support construction 87 during the paying out of the cable in order to decrease the torsion in the cable 89. This is achieved by turning or rotating either the support construction 87, the cable spool 91, or both.

Furthermore the winding comprises placement of the cable 89 into said turns in such a way that the cable 89 is held fixed inside the inner space by the cable 89 striving to straighten itself towards the inner surface 90 of the support construction 87. Since the inner surface 90 of the support construction is concave and comprises opposite surface sections the cable 89 will be clamped fixed. The method further comprises bending the cable 89 against the inner surface of the support construction 87 into a shape corresponding to said turns of the coil. The cable 89 is thus bent by the cable 89 being pressed towards the inner surface.

Furthermore the cable 89 is placed inside the inner space with aid from the placement member 93. The placement member 93 is bowl shaped and comprises a concave U-shaped surface onto which the cable 89 glides during the paying out of the cable 89. By the placement member being bowl shaped it is simple to control the placement of the cable by moving the placement member.

In this example at least some of the turns of the coil are wound from the outside and inwards. In that the cable is wound into said turns from the outside and inwards a smaller force is needed during the winding, since a pulling force is not needed to make the cable to be wound around for example an inner bobbin. By the cable being wound from the outside and inwards this is achieved also during winding of the inner turns of the coil.

In a first step the cable is thus wound into a first turn bearing against the inner surface 90. In this example a layer comprising several turns is wound along the inside of the support construction 87. After that the manufacturing of the device comprises placement of at least one spacer member 79 inside the first layer of outer turns. In a following step the manufacturing of the device comprises winding an inner turn. The inner turn bears against and is bent towards the inside of said spacer members 79. Thanks to the spacer members 79 an air gap is therefore formed between the outer turn and the inner turn.

The manufacturing finally comprises connection of an arrangement shaped for electrical connection between the second casing and an electrically functional module, to the second casing of the cable 89. This connection is in this example performed continuously, at the same time with the winding of the cable 89 into said turns. Thus the arrangement is easily connected to the casing without any hindrance from already wound turns. The arrangement is also connected to said electrically functional modules.

The manufacturing also comprises a number of further steps, which are not described closer in the application, since they may easily be conceived by a man skilled in the art. These steps for example comprise mounting the iron core, mounting of a protective housing, connection of a fan arrangement etc.

The number of constructive elements mentioned in the examples, such as the number of turns, coils, layers of turns, modules and so on are only chosen to allow a clear illustration of the invention. A man skilled in the art may without an unduly effort vary this number, so that it fits a specific application. In a corresponding way the ordering in which the different manufacturing steps are performed during the manufacturing of the device may be varied.

Furthermore the coil may comprise turns which are wound from the inside and outwards, for example for the inmost turns of the coil. The device may comprise spacer members placed between the outer turns and the support construction so that an air gap is obtained there between as well. The device may also comprise more than one support construction, for example arranged one inside the other.

The control modules controlling the electrically functional modules may comprise switchers, relays or electronic control circuits. The control modules may be arranged to switch the connection between one portion of the second casing to two different functional modules.

## Claims

1. An inductive device (15,27) intended to be connected with a multiple phase alternating current power network (1) in connection with a zero voltage point (5) of the power network, which device comprises a coil (17,35) having an inductance and which is adapted to be connected between the power network and an earth potential, wherein the device is designed to allow a reactive current through the coil in connection with a possible earth fault, **characterized in that** said coil (17,35) comprises a cable (19,37,89) comprising an inner electrical conductor (21,39) and a first insulating casing (23,41) arranged around the inner electrical conductor, which cable is flexible and wound into at least one turn of the coil.

2. A device according to claim 1, **characterized in that** the cable comprises a second casing (45) arranged around the first insulating casing (41), which second casing is electrically conductive so that the electrical field is trapped inside the cable (37).

3. A device according to claim 2, **characterized in that** the second electrically conductive casing (45) is of metal.

4. A device according to claim 2 or 3, **characterized in that** the device comprises an electrically functional module (51,52,53) and an arrangement (49) arranged to electrically connect at least one portion of the second casing (45) to the electrically functional module.

5. A device according to claim 4, **characterized in that** at least one portion (67,69) of the second casing is arranged to form a secondary winding to the coil (35), wherein this portion of the second casing is connected with an inductance control module (52,53) arranged to control the inductance of the device.

6. A device according to claim 5, **characterized in that** said inductance control module comprises a voltage modulator (61).

7. A device according to any of the claims 2-6, **characterized in that** the second casing (45) in the cable is divided into at least two electrically separate portions (65,67,69).

8. A device according to any of the previous claims, **characterized in that** the device comprises a support construction (75,87) comprising an inner surface (90) defining an inner space (77,88) and that the cable is wound into said coil inside the inner space, wherein the cable (37,89) is held fixed inside the inner space by the cable striving to straighten itself towards the inner surface.

9. A device according to claim 8, **characterized in that** the cable is wound so that at least one turn of the cable bears against and is held bent by the inner surface (77,89) of the support construction.

10. A device according to claim 8 or 9, **characterized in that** a coil comprises at least two turns (83,85) of said cable, wherein one turn (83) has a larger circumference than and is arranged to enclose the second turn (85), wherein the coil is wound from the outside and inwards so that the outer turn is wound before the inner turn.

11. A device according to claim 10, **characterized in that** the inner turn at least indirectly is kept bent by the inside of the outer turn.

12. A device according to any of the previous claims, **characterized in that** the coil comprises at least two turns of said cable, and that the device comprises at least one spacer member (79) arranged between the two turns (83,85) so that an air gap is obtained there between.

13. A method for manufacturing of an inductive device intended to be used in connection with a zero point of a multiple phase alternating current power network, which device comprises a coil having an inductance, and which is adapted to be connected between the power network and an earth potential, and which is designed to allow a reactive current through the coil in connection with a possible earth fault, **characterized in that** the method comprises:
- manufacturing of at least a part of said coil by winding a flexible cable (89) for at least one turn, which cable comprises an inner electrical conductor and a first insulating casing arranged around the inner conductor.

14. A method according to claim 13, **characterized in that** the cable being wound is designed according to any of the claims 2,3 or 7.

15. A method according to claim 14, **characterized in that** the manufacturing comprises:
- connection of an arrangement designed for electrical connection between the second casing and an electrically functional module according to any of claims 4-6.

16. A method according to any of the claims 13-15, **characterized in that** the winding of the cable into at least one turn of said coil comprises:
- feeding the cable into an inner space (88) defined by an inner surface (90) of a support construction (87) of the device and placement of the cable into said turns in such a way that the cable is held fixed inside the inner space by the cable striving to straighten itself towards the inner surface (90) of the support construction.

17. A method according to claim 16, **characterized in that** the placement of the cable comprises bending the cable towards the inner surface of the support construction (87) into a shape corresponding to said turns of the coil.

18. A method according to any of the claims 16-17, **characterized in that** the manufacturing of the coil comprises winding the cable (89) from the outside and inwards by the cable being wound into at least one first, outer turn (83) after which the cable is wound into at least one second, inner turn (85).

19. A method according to the claim 18, **characterized in that** the second, inner turn (83) is wound to at least indirectly bear against and be bent by the inside of the first, outer turn (85).

20. A method according to any of the previous claims, **characterized in that** the winding of the cable into said coil comprises placement of at least one spacer member (79) between a first and a second turn of the cable, so that an air gap is formed there between.

21. A method according to any of the previous claims, **characterized in that** the winding of the cable into said turns comprises controlling the placement of the cable with a bowl shaped placement member (93).

22. A method according to any of the previous claims, **characterized in that** the feeding of the cable comprises paying out of the cable from a cable spool (91) and turning the cable spool (91) and/or the support construction (87) in relation to each other during the winding, so that the torsion in the cable (89) is decreased.

## Patentansprüche

1. Ein induktives Gerät (15, 27), welches verbunden werden soll mit einem multiple phasen-alternierendem Strom-Leistungs-Netzwerk (1) in Verbindung mit einem Null-Spannungs-Punkt (5) von dem Leistungs-Netzwerk, wobei das Gerät aufweist eine Spule (17, 35), welche eine Induktivität besitzt, und welches angepasst ist verbunden zu werden zwischen dem Leistungs-Netzwerk und einem Erdungs-Potential, wobei das Gerät konzipiert ist einen reaktiven Strom durch die Spule zu erlauben in Verbindung mit einer möglichen Erdungs-Störung,
**dadurch gekennzeichnet, dass**
die Spule (17, 35) aufweist ein Kabel (19, 37, 89) aufweisend einen inneren elektrischen Leiter (21, 39) und eine erste isolierende Hülle (23, 41) angeordnet um den inneren elektrischen Leiter, wobei das Kabel flexibel und gewickelt ist in zumindest einer Windung von der Spule.

2. Ein Gerät gemäß Anspruch 1, **dadurch gekennzeichnet, dass** das Kabel aufweist eine zweite Hülle (45) angeordnet um die erste isolierende Hülle (41), wobei die zweite Hülle elektrisch leitend ist, so dass das elektrische Feld innerhalb des Kabels (37) gefangen ist.

3. Ein Gerät gemäß Anspruch 2, **dadurch gekennzeichnet, dass** die zweite elektrisch leitende Hülle (45) aus Metall ist.

4. Ein Gerät gemäß Anspruch 2 oder 3, **dadurch gekennzeichnet, dass** das Gerät aufweist ein elektrisches funktionales Modul (51, 52, 53) und eine Anordnung (49) angeordnet, um elektrisch zumindest einen Teil von der zweiten Hülle (45) mit dem elektrischen funktionalen Modul zu verbinden.

5. Ein Gerät gemäß Anspruch 4, **dadurch gekennzeichnet, dass** zumindest ein Teil (67, 69) von der zweiten Hülle angeordnet ist, um eine sekundäre Aufwicklung der Spule (35) zu bilden, wobei dieser Teil von der zweiten Hülle verbunden ist mit einem Induktivität-Steuerungs-Modul (52, 53), angeordnet zum Steuern der Induktivität von dem Gerät.

6. Ein Gerät gemäß Anspruch 5, **dadurch gekennzeichnet, dass** das Induktivität-Steuerungs-Modul aufweist einen Spannungs-Modulator (61).

7. Ein Gerät gemäß einem von den Ansprüchen 2-6, **dadurch gekennzeichnet, dass** die zweite Hülle (45) in dem Kabel geteilt ist in zumindest zwei elektrisch separierte Teile (65, 67, 69).

8. Ein Gerät gemäß einem von den vorherigen Ansprüchen, **dadurch gekennzeichnet, dass** das Gerät aufweist eine Stützkonstruktion (75, 87) aufweisend eine innere Oberfläche (90), welche einen inneren Raum (77, 88) definiert, und dass das Kabel gewickelt ist in der Spule innerhalb des inneren Raums, wobei das Kabel (37, 89) fixiert gehalten wird innerhalb des inneren Raums durch das Bestreben des Kabels sich selbst gerade zu strecken gegen die innere Oberfläche.

9. Ein Gerät gemäß Anspruch 8, **dadurch gekennzeichnet, dass** das Kabel gewickelt ist, so dass die zumindest eine Windung von dem Kabel gegen die innere Oberfläche (77, 89) von der Stützkonstruktion drückt und gehalten wird durch die innere Oberfläche (77, 89) von der Stützkonstruktion.

10. Ein Gerät gemäß Anspruch 8 oder 9, **dadurch gekennzeichnet, dass** eine Spule aufweist zumindest zwei Windungen (83, 85) von dem Kabel, wobei eine Windung (83) einen längeren Umfang hat als die zweite Windung (85) und angeordnet ist, um die zweite Windung (85) zu umschließen, wobei die Spule gewickelt ist von der Außenseite und nach Innen, so dass die äußere Windung gewickelt ist vor der inneren Windung.

11. Ein Gerät gemäß Anspruch 10, **dadurch gekennzeichnet, dass** die innere Windung zumindest indirekt gebogen gehalten wird durch die Innenseite von der äußeren Windung.

12. Ein Gerät gemäß einen der vorherigen Ansprüche, **dadurch gekennzeichnet, dass** die Spule aufweist, zumindest zwei Windungen von dem Kabel, und dass das Gerät aufweist zumindest ein Abstandsteil (79) angeordnet zwischen den zwei Windungen (83, 85), so dass eine Luftlücke dazwischen erreicht wird.

13. Ein Verfahren zum Herstellen von einem induktiven Gerät, welches verwendet werden soll in Verbindung mit einem Null-Punkt von einem multiplen phasen-alternierendem Strom-Leistungs-Netzwerk, wobei das Gerät aufweist eine Spule, welche eine Induktivität besitzt, und welches angepasst ist verbunden zu werden zwischen dem Leistungs-Netzwerk und einem Erdungs-Potential, und welches konzipiert ist einen reaktiven Strom durch die Spule zu erlauben in Verbindung mit einer möglichen Erdungsstörung, **dadurch gekennzeichnet, dass** das Verfahren aufweist:
- Herstellen von zumindest einem Teil von der Spule durch Aufwickeln eines flexiblen Kabels (89) für zumindest eine Windung, wobei das Kabel aufweist einen inneren elektrischen Leiter und eine erste isolierende Hülle, angeordnet um den inneren Leiter.

14. Ein Verfahren gemäß Anspruch 13, **dadurch gekennzeichnet, dass** das gewundene Kabel konzipiert ist gemäß einem von den Ansprüchen 2, 3, oder 7.

15. Ein Verfahren gemäß Anspruch 14, **dadurch gekennzeichnet, dass** das Herstellen aufweist:
- Verbindung von einer Anordnung konzipiert für elektrische Verbindung zwischen der zweiten Hülle und einem elektrischen funktionalen Modul gemäß einem von den Ansprüchen 4-6.

16. Ein Verfahren gemäß einem von den Ansprüchen 13 bis 15, **dadurch gekennzeichnet, dass** die Aufwicklung von dem Kabel in zumindest eine Windung von der Spule aufweist:
- Zuführen des Kabels in einen inneren Raum (88) definiert durch eine innere Oberfläche (90) von einer Stützkonstruktion (87) von dem Gerät und Platzierung von dem Kabel in die Windung in solcher Weise, dass das Kabel fixiert gehalten wird innerhalb des inneren Raums durch das Bestreben des Kabels sich selbst gerade zu strecken gegen die innere Oberfläche (90) von der Stützkonstruktion.

17. Ein Verfahren gemäß Anspruch 16, **dadurch gekennzeichnet, dass** die Platzierung von dem Kabel aufweist Biegen des Kabels in Richtung der inneren Oberfläche von der Stützkonstruktion (87) in eine Form entsprechend zu den Windungen von der Spule.

18. Ein Verfahren gemäß einem von den Ansprüchen 16-17, **dadurch gekennzeichnet, dass** das Herstellen von der Spule aufweist Aufwickeln des Kabels (89) von der Außenseite und nach Innen dadurch, dass das Kabel gewickelt wird in zumindest eine erste äußere Windung (83) und danach das Kabel gewickelt wird in zumindest eine zweite innere Windung (85).

19. Ein Verfahren gemäß Anspruch 18, **dadurch gekennzeichnet, dass** die zweite innere Windung (83) gewickelt wird, um zumindest indirekt gegen die Innenseite von der ersten äußeren Windung (85) zu drücken und gebogen zu werden durch die Innenseite von der ersten äußeren Windung (85).

20. Ein Verfahren gemäß einem von den vorherigen Ansprüchen, **dadurch gekennzeichnet, dass** die Aufwicklung von dem Kabel in die Spule aufweist Platzierung von zumindest einem Abstandsteil (79) zwischen einer ersten und einer zweiten Windung von dem Kabel, so dass eine Luftlücke dazwischen gebildet wird.

21. Ein Verfahren gemäß einem von den vorherigen Ansprüchen, **dadurch gekennzeichnet, dass** die Aufwicklung von dem Kabel in die Windungen aufweist Steuern der Platzierung von dem Kabel mit einem schalenförmigen Platzierungsteil (93).

22. Ein Verfahren gemäß einem von den vorherigen Ansprüchen, **dadurch gekennzeichnet, dass** das Zuführen von dem Kabel aufweist Auslaufen lassen des Kabel von einer Kabelspule (91) und Winden der Kabelspule und/oder der Stützkonstruktion (87) gegeneinander während des Aufwickelns, so dass die Torsion in dem Kabel (89) verringert wird.

## Revendications

1. Dispositif inductif (15, 27) destiné à être relié à un réseau d'alimentation en courant alternatif à phases multiples (1) en connexion avec un point à tension nulle (5) du réseau d'alimentation, ledit dispositif comprenant une bobine (17, 35) ayant une inductance et qui est adapté pour être relié entre le réseau d'alimentation et un potentiel de terre, dans lequel le dispositif est conçu pour permettre un courant réactif dans la bobine en lien avec un défaut de terre possible, **caractérisé en ce que** ladite bobine (17, 35) comprend un câble (19, 37, 89) comprenant un conducteur électrique interne (21, 39) et un premier boîtier isolant (23, 41) placé autour du conducteur électrique interne, ledit câble étant flexible et enroulé en au moins un tour de la bobine.

2. Dispositif selon la revendication 1, **caractérisé en ce que** le câble comprend un second boîtier (45) prévu autour du premier boîtier isolant (41), ledit second boîtier étant électriquement conducteur de sorte que le champ électrique soit piégé à l'intérieur du câble (37).

3. Dispositif selon la revendication 2, **caractérisé en ce que** le second boîtier électriquement conducteur (45) est en métal.

4. Dispositif selon la revendication 2 ou 3, **caractérisé en ce que** le dispositif comprend un module électriquement fonctionnel (51, 52, 53) et un ensemble (49) prévu pour relier électriquement au moins une partie du second boîtier (45) au module électriquement fonctionnel.

5. Dispositif selon la revendication 4, **caractérisé en ce qu'**au moins une partie (67, 69) du second boîtier est prévu pour former un enroulement secondaire vers la bobine (35), dans lequel cette partie du second boîtier est reliée à un module de contrôle d'inductance (52, 53) prévu pour contrôler l'inductance du dispositif.

6. Dispositif selon la revendication 5, **caractérisé en ce que** ledit module de contrôle d'inductance comprend un modulateur de tension (61).

7. Dispositif selon l'une quelconque des revendications 2 à 6, **caractérisé en ce que** le second boîtier (45) dans le câble est divisé en au moins deux parties électriquement distinctes (65, 67, 69).

8. Dispositif selon l'une quelconque des revendications précédentes, **caractérisé en ce que** le dispositif comprend une construction de support (75, 87) comprenant une surface interne (90) définissant un espace interne (77, 88), et **en ce que** le câble est enroulé en ladite bobine à l'intérieur de l'espace interne, dans lequel le câble (37, 89) est maintenu fixé à l'intérieur de l'espace interne par le câble qui s'efforce de se redresser vers la surface interne.

9. Dispositif selon la revendication 8, **caractérisé en ce que** le câble est enroulé de sorte qu'au moins un tour du câble repose contre et soit maintenu courbé par la surface interne (77, 89) de la construction de support.

10. Dispositif selon la revendication 8 ou 9, **caractérisé en ce qu'**une bobine comprend au moins deux tours (83, 85) dudit câble, dans lequel un tour (83) possède une plus grande circonférence que et est disposé pour enfermer le second tour (85), dans lequel la bobine est enroulée depuis l'extérieur et vers l'intérieur de sorte que le tour extérieur soit enroulé avant le tour intérieur.

11. Dispositif selon la revendication 10, **caractérisé en ce que** le tour intérieur est maintenu fléchi au moins directement par l'intérieur du tour extérieur.

12. Dispositif selon l'une quelconque des revendications précédentes, **caractérisé en ce que** la bobine comprend au moins deux tours dudit câble, et **en ce que** le dispositif comprend au moins un élément d'entretoise (79) prévu entre les deux tours (83, 85) de sorte qu'un entrefer soit obtenu entre ceux-ci.

13. Procédé de fabrication d'un dispositif inductif destiné à être utilisé en lien avec un point zéro d'un réseau d'alimentation en courant alternatif à phases multiples, ledit dispositif comprenant une bobine ayant une inductance, et étant adapté pour être relié entre le réseau d'alimentation et un potentiel de terre, et qui est conçu pour permettre un courant réactif dans la bobine en lien avec un défaut de terre possible, **caractérisé en ce que** le procédé comprend :
- la fabrication d'au moins une partie de ladite bobine en enroulant un câble flexible (89) sur au moins un tour, ledit câble comprenant un conducteur électrique interne et un premier boîtier isolant prévu autour du conducteur interne.

14. Procédé selon la revendication 13, **caractérisé en ce que** le câble enroulé est conçu selon l'une quelconque des revendications 2, 3 ou 7.

15. Procédé selon la revendication 14, **caractérisé en ce que** la fabrication comprend :
- le raccordement d'un ensemble conçu pour la liaison électrique entre le second boîtier et un module électriquement fonctionnel selon l'une quelconque des revendications 4 à 6.

16. Procédé selon l'une quelconque des revendications 13 à 15, **caractérisé en ce que** l'enroulement du câble en au moins un tour de ladite bobine comprend :
- la fourniture du câble dans un espace interne (88) défini par une surface interne (90) d'une construction de support (87) du dispositif et le placement du câble en lesdits tours de sorte que le câble soit maintenu fixé à l'intérieur de l'espace interne par le câble qui s'efforce de se redresser vers la surface interne (90) de la construction de support.

17. Procédé selon la revendication 16, **caractérisé en ce que** le placement du câble comprend le cintrage du câble vers la surface interne de la construction de support (87) en une forme correspondant auxdits tours de la bobine.

18. Procédé selon l'une quelconque des revendications 16 et 17, **caractérisé en ce que** la fabrication de la bobine comprend l'enroulement du câble (89) depuis l'extérieur et vers l'intérieur en enroulant le câble en au moins un premier tour extérieur (83), après quoi le câble est enroulé en au moins un second tour intérieur (85).

19. Procédé selon la revendication 18, **caractérisé en ce que** le second tour intérieur (83) est enroulé afin de reposer au moins indirectement contre et d'être courbé par l'intérieur du premier tour extérieur (85).

20. Procédé selon l'une quelconque des revendications précédentes, **caractérisé en ce que** l'enroulement du câble en ladite bobine comprend le placement d'au moins un élément d'entretoise (79) entre un premier et un second tours du câble, de sorte qu'un entrefer soit formé entre ceux-ci.

21. Procédé selon l'une quelconque des revendications précédentes, **caractérisé en ce que** l'enroulement du câble en lesdits tours comprend le contrôle du placement du câble avec un élément de placement en forme de cuvette (93).

22. Procédé selon l'une quelconque des revendications précédentes, **caractérisé en ce que** la fourniture du câble comprend le déroulement du câble depuis une bobine de câble (91) et la rotation de la bobine de câble (91) et/ou de la construction de support (87) l'une par rapport à l'autre pendant l'enroulement, de sorte que la torsion dans le câble (89) soit réduite.
